# EUROPEAN PATENT APPLICATION

(11) **EP 4 618 616 A1**
(43) Date of publication of application: **17.09.2025**
(21) Application number: 23888508.1
(22) Date of filing: 25.10.2023
(51) Int. Cl.: H04W 28/06, H04W 24/10, H04W 84/12

(54) **COMMUNICATION DEVICE AND COMMUNICATION METHOD**

(30) Priority: 11.11.2022 JP 2022181083
(71) Applicant: Panasonic Intellectual Property Corporation of America, Torrance, CA 90504 (US)
(72) Inventor: NAKANO, Takayuki, Kadoma-shi, Osaka 571-0057 (JP); <MOTOZUKA, Hiroyuki, Kadoma-shi, Osaka 571-0057 (JP); URABE, Yoshio, Kadoma-shi, Osaka 571-0057 (JP); IWAI, Takashi, Kadoma-shi, Osaka 571-0057 (JP)
(74) Representative: Grünecker Patent- und Rechtsanwälte PartG mbB
(86) International application number: PCT/JP2023/038557
(87) International publication number: WO 2024/101160

(57) **Abstract**

The present invention provides a communication device and a communication method. The communication device is a control unit that generates frames including pieces of information on individual STAs (STA Info), at least one piece of STA Info among the pieces of STA Info being AI/ML sounding NDP info, and has a communication unit that transmits the generated frames.

## Description

### Technical Field

The present disclosure relates to a communication apparatus and a communication method.

### Background Art

Artificial intelligence (hereinafter referred to as "AI") or machine learning (hereinafter referred to as "ML") technology for wireless local area networks (LANs) has been studied in industry and academia (for example, Non-Patent Literature (hereinafter referred to as "NPL") 1).

In the Institute of Electrical and Electronics Engineers (IEEE) 802.11 working group, Topic Interest Group (TIG) on AI/ML (hereinafter also referred to as "AIML") started in July 2022 and the study has been started (for example, NPL 2).

As one technique whose application has been studied for wireless LANs, channel state information (hereinafter referred to as "CSI") compression for the purpose of reducing the amount of CSI feedback has been studied (for example, NPL 3).

### Citation List

### Non-Patent Literature

NPL 1
   S. Szott, K. Kosek-Szott, P. Gawlowicz, J. T. Gomez, B. Bellalta, A. Zubow, F. Dressler, "WiFi Meets ML: A Survey on Improving IEEE 802.11 Performance with Machine Learning" in IEEE Communications Surveys & Tutorials, vol.24, no.3, pp.1843-1893
NPL 2
   IEEE 802.11-22/847r3, AIML TIG July 2022 Agenda
NPL 3
   IEEE 802.11-22/950r2, Discussion on Connection between AI/ML & Wireless LAN
NPL 4
   M. Deshmukh, Z. Lin, H. Lou, M. Kamel, R. Yang, I. Guvenc, "Intelligent Feedback Overhead Reduction (iFOR) in Wi-Fi 7 and Beyond," in Proceedings of 2022 VTC-Spring
NPL 5
   P. K. Sangdeh, H. Pirayesh, A. Mobiny, H. Zeng, "LB-SciFi: Online Learning-Based Channel Feedback for MU-MIMO in Wireless LANs," in Proceedings of 2020 IEEE 28th ICNP

### Summary of Invention

An NDP Announcement (NDPA) frame for specifying sounding NDP (Null data PPDU (PLCP (Physical Layer Convergence Protocol) Protocol Data Unit)) specifications for measurement for AI/ML has not been studied.

A communication apparatus according to an exemplary embodiment of the present disclosure includes: a controller that generates a frame including information on each STA (also referred to as station, terminal or node) (STA Info), where at least one piece of the STA Info among pieces of the STA Info is sounding NDP info for AI/ML; and a transmitter that transmits the generated frame.

It should be noted that general or specific embodiments may be implemented as a system, an apparatus, a method, an integrated circuit, a computer program, a storage medium, or any selective combination thereof.

The STA can specify the sounding NDP format for AI/ML to each STA. Further, the STA can specify mixed presence of a plurality of sounding NDP formats.

### Brief Description of Drawings

FIG. 1 illustrates an exemplary non-trigger-based sounding procedure for AI/ML;
FIG. 2 illustrates an exemplary trigger-based sounding procedure for AI/ML;
FIG. 3 illustrates exemplary interfaces for an AIML Measurement Setup Phase;
FIG. 4 illustrates exemplary interfaces for a non-trigger-based AIML Measurement Phase;
FIG. 5 illustrates exemplary interfaces for a trigger-based AIML Measurement Phase;
FIG. 6 illustrates exemplary interfaces of an AIML Measurement Termination Phase;
FIG. 7 illustrates a HE NDP Announcement frame format;
FIG. 8 illustrates a Sounding Dialog Token;
FIG. 9 illustrates an STA Info field format in an EHT NDP Announcement frame;
FIG. 10 illustrates an STA Info field format in an AIML NDP Announcement frame;
FIG. 11 illustrates NDP Announcement frame variant encoding;
FIG. 12 illustrates AID 11 subfield encoding in an NDP Announcement frame;
FIG. 13 illustrates AIML Type subfield encoding;
FIG. 14 illustrates exemplary AIML sounding NDP info in the case of AIML Type = 0 (Index-Based CSI);
FIG. 15 illustrates exemplary AIML sounding NDP info in the case of AIML Type = 1 (Compressed CSI feedback scheme);
FIG. 16 illustrates an exemplary NDPA frame format for AIML;
FIG. 17 illustrates exemplary definitions for Type value subfields and Subtype value subfields in a Frame Control field;
FIG. 18 illustrates exemplary definitions for Control Frame Extension in the Frame Control field;
FIG. 19 illustrates exemplary definitions for NDP Announcement Types;
FIG. 20 illustrates an exemplary Trigger frame format for AIML;
FIG. 21 illustrates an exemplary configuration of an AIML Sounding NDP Information Element;
FIG. 22 illustrates a configuration of an STA; and
FIG. 23 illustrates a configuration of another communication apparatus.

### Description of Embodiments

According to an exemplary embodiment of the present disclosure, a node (STA) is capable of specifying and notifying a subfield (AIML sounding NDP info), in which the sounding NDP format for AI/ML is defined, to other individual nodes (STAs).

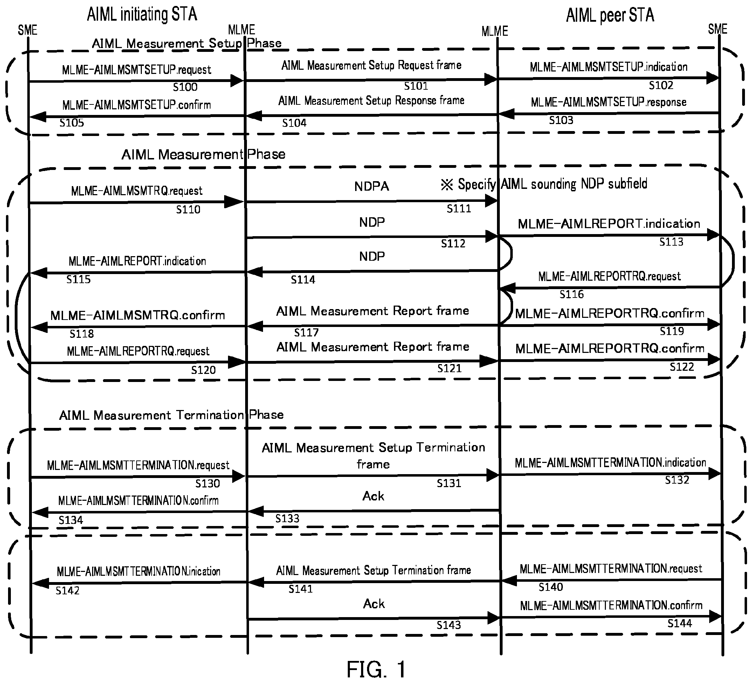

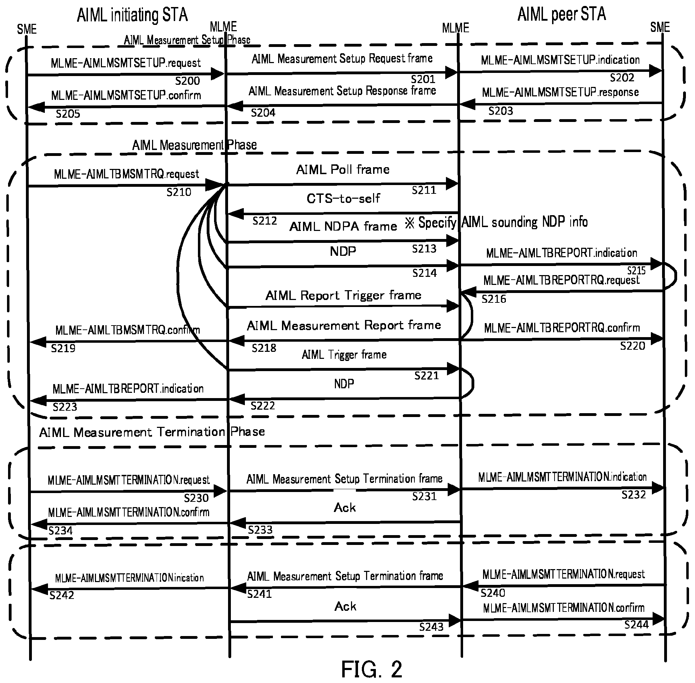

FIGS. 1 and 2 illustrate exemplary sounding procedures for AI/ML. The exemplary procedure in FIG. 1 illustrates an exemplary non-trigger-based (non-TB) sounding procedure. The exemplary procedure in FIG. 2 illustrates an exemplary trigger-based (TB) sounding procedure. Each of the exemplary procedures is composed of three phases which are an AIML Measurement Setup Phase, an AIML Measurement Phase, and an AIML Measurement Termination Phase.

The AIML Measurement Setup Phase is a phase for performing the setting of sounding for AI/ML. The AIML Measurement Phase is a phase for transmitting an NDP Announcement (NDPA) and performing measurement using an NDP. The AIML Measurement Termination Phase is a phase for terminating the setting of sounding for AI/ML. FIGS. 1 and 2 illustrate two procedures for the AIML Measurement Termination Phase which are a procedure starting from an AIML initiating STA and a procedure starting from an AIML peer STA. In the AIML Measurement Termination Phase, one of the procedures may be used.

The station management entity (SME) represents a terminal management function, and the media access control (MAC) sublayer management entity (MLME) represents a MAC layer management function.

The AIML initiating STA is an STA which indicates sounding for AIML, and the AIML peer STA is an STA which receives an indication of sounding for AIML. The AIML initiating STA can perform the sounding procedure for AI/ML described in FIG. 1 or 2 on each AIML peer STA.

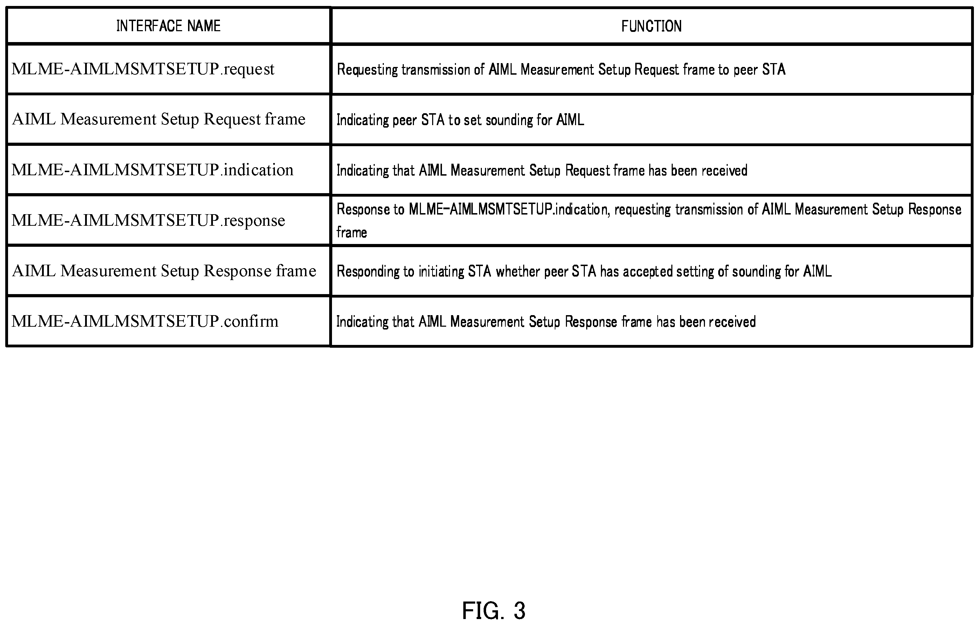

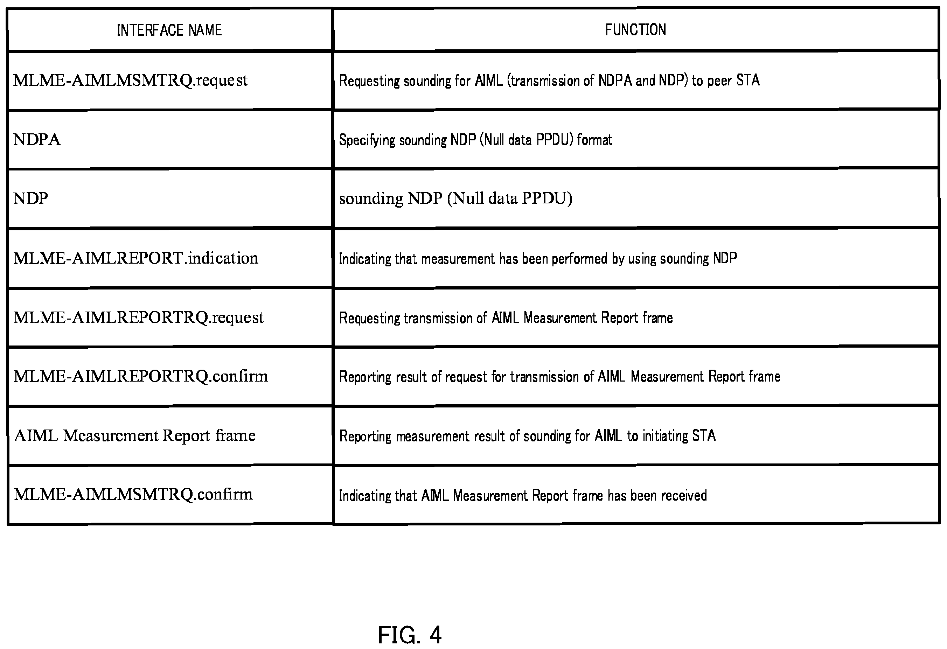

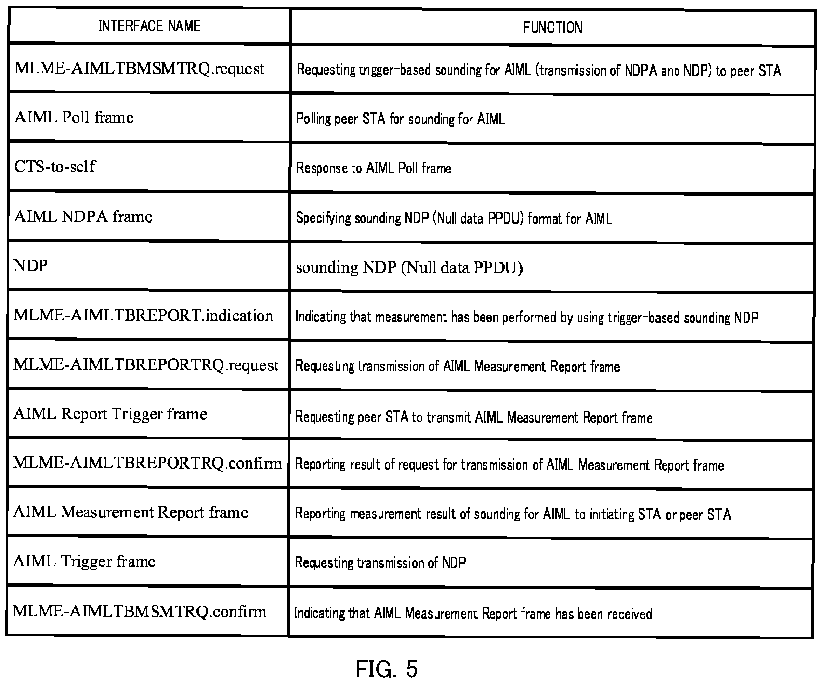

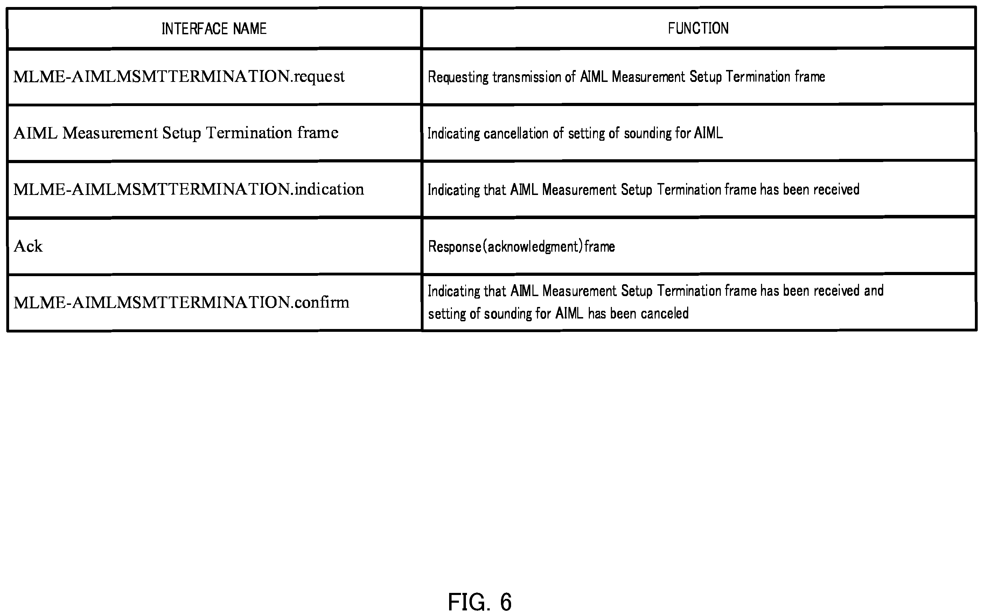

FIGS. 3 to 6 illustrate interface names (frame names) and functions in the respective phases in the exemplary sounding procedures in FIGS. 1 and 2.

The procedure in the AIML Measurement Setup Phase will be described.

First, the SME of the AIML initiating STA transmits an MLME-AIMLMSMTSETUP.request to the MLME of the AIML initiating STA (S100, S200). The MLME-AIMLMSMTSETUP.request is a frame for requesting the transmission of an AIML Measurement Setup Request frame to the peer STA.

The MLME of the AIML initiating STA that has received the MLME-AIMLMSMTSETUP.request transmits an AIML Measurement Setup Request frame to the MLME of the AIML peer STA (S101, S201). The AIML Measurement Setup Request frame is a frame for indicating the peer STA to set sounding for AIML.

The MLME of the AIML peer STA that has received the AIML Measurement Setup Request frame transmits an NILNM-AINILMSMTSETUP.indication to the SME of the AIML peer STA (S102, S202). The MLME-AIMLMSMTSETUP.indication is a frame indicating that an AIML Measurement Setup Request frame has been received.

The SME of the AIML peer STA that has received the MLME-AIMLMSMTSETUP.indication transmits an MLME-AIMLMSMTSETUP.response to the MLME of the AIML peer STA (S103, S203). The MLME-AIMLMSMTSETUP.response is a response signal to the MLME-AIMLMSMTSETUP.indication and is a frame for requesting the transmission of an AIML Measurement Setup Response frame.

The MLME of the AIML peer STA that has received the MLME-AIMLMSMTSETUP.response transmits an AIML Measurement Setup Response frame to the MLME of the AIML initiating STA (S104, S204). The AIML Measurement Setup Response frame is a frame for responding to the AIML initiating STA whether the peer STA has accepted the setting of sounding for AIML.

The MLME of the AIML initiating STA that has received the AIML Measurement Setup Response frame transmits an MLME-AIMLMSMTSETUP.confirm to the SME of the AIML initiating STA (S105, S205). The MLME-AIMLMSMTSETUP.confirm is a signal indicating that an AIML Measurement Setup Response frame has been received.

The procedure in the AIML Measurement Phase will be described. With respect to the AIML Measurement Phase, the procedure in the non-trigger-based AIML Measurement Phase illustrated in FIG. 1 differs from the procedure in the trigger-based AIML Measurement Phase illustrated in FIG. 2. First, the procedure in the non-trigger-based AIML Measurement Phase illustrated in FIG. 1 will be described.

First, the SME of the AIML initiating STA that has received the MLME-AIMLMSMTSETUP.confirm in the AIML Measurement Setup Phase transmits an MLME-AIMLMSMTRQ.request to the MLME of the AIML initiating STA (S110). The MLME-AIMLMSMTRQ.request is a frame for requesting the transmission of non-triggered-based sounding for AIML to the peer STA. The sounding for AIML is performed by using, for example, an NDPA and an NDP.

The MLME of the AIML initiating STA that has received the MLME-AIMLMSMTRQ.request transmits an NDPA to the MLME of the AIML peer STA (S111). The NDPA is a frame for specifying the sounding NDP format. Further, the MLME of the AIML initiating STA transmits an NDP corresponding to the designation by the NDPA to the MLME of the AIML peer STA(S112). The NDP is a sounding NDP frame. By specifying the sounding NDP format for AI/ML to each STA in the NDPA, it is possible to perform NDP transmission for AI/ML to each STA and to perform measurement by using the NDP received at each node.

The MLME of the AIML peer STA that has received the NDP transmits an MLME-AIMLREPORT.indication to the SME of the AIML peer STA (S113). The MLME-AIMLREPORT.indication is a frame indicating that the measurement has been performed by using a sounding NDP. Further, the MLME of the AIML peer STA transmits an NDP to the MLME of the AIML initiating STA (S114).

The MLME of the AIML initiating STA that has received the NDP transmits an MLME-AIMLREPORT.indication to the SME of the AIML initiating STA (S115). The MLME-AIMLREPORT.indication is a frame indicating that the measurement has been performed by using a non-trigger-based sounding NDP.

The SME of the AIML peer STA that has received the MLME-AIMLREPORT.indication transmits an MLME-AIMLREPORTRQ.request to the MLME of the AIML peer STA (S116). The MLME-AIMLREPORTRQ.request is a frame for requesting the transmission of an AIML Measurement Report frame.

The MLME of the AIML peer STA that has received the MLME-AIMLREPORTRQ.request transmits an AIML Measurement Report frame to the MLME of the AIML initiating STA (S117). The AIML Measurement Report frame is a frame for reporting the measurement result of sounding for AIML to the counterpart STA. In addition, the MLME of the AIML peer STA transmits an MLME-AIMLREPORTRQ.confirm to the SME of the AIML peer STA (S119). The MLME-AIMLREPORTRQ.confirm is a frame indicating that an AIML Measurement Report frame has been transmitted.

The MLME of the AIML initiating STA that has received the AIML Measurement Report frame transmits an MLME-AIMLMSMTRQ.confirm to the SME of the AIML initiating STA (S118).

The SME of the AIML initiating STA that has received the MLME-AIMLMSMT.indication transmits an MLME-AIMLREPORTRQ.request to the MLME of the AIML initiating STA (S120).

The MLME of the AIML initiating STA that has received the MLME-AIMLREPORTRQ.request transmits an AIML Measurement Report frame to the MLME of the AIML peer STA (S121).

The MLME of the AIML peer STA that has received the AIML Measurement Report frame transmits an MLME-AIMLREPORTRQ.confirm to the SME of the AIML peer STA (S122).

FIG. 1 illustrates an example in which the MLME notifies the SME of the measurement result by the MLME-AIMLREPORT.indication, and an example in which the MLME notifies the SME of the received measurement result report by the MLME-AIMLMSMTRQ.confirm. However, the measurement result may be notified to an external application or a higher layer.

FIG. 1 illustrates an example in which an STA transmits the measurement result to the counterpart STA, but the STA may perform an operation utilizing the measurement result without transmitting the measurement result or may perform an operation utilizing the measurement result at the STA as the transmission source while transmitting the measurement result to the counterpart STA. The SME or the MLME may include an application for performing an operation utilizing the measurement result.

Next, the procedure in the trigger-based AIML Measurement Phase illustrated in FIG. 2 will be described.

First, the SME of the AIML initiating STA that has received the MLME-AIMLMSMTSETUP.confirm in the AIML Measurement Setup Phase transmits an MLME-AIMLTBMSMTRQ.request to the MLME of the AIML initiating STA (S210). The MLME-AIMLTBMSMTRQ.request is a frame for requesting trigger-based sounding for AIML (the transmission of an NDPA and an NDP) to the peer STA. The sounding for AIML is performed by using, for example, an NDPA and an NDP.

The MLME of the AIML initiating STA that has received the MLME-AIMLTBMSMTRQ.request transmits an AIML Poll frame to the MLME of the AIML peer STA (S211). The AIML Poll frame is a frame for polling the peer STA for sounding for AIML.

The MLME of the AIML peer STA that has received the AIML Poll frame transmits a CTS-to-self to the MLME of the AIML initiating STA (S212). The CTS-to-self is a response frame for responding to an AIML Poll frame.

When the MLME of the AIML initiating STA that had received the MLME-AIMLTBMSMTRQ.request has received the CTS-to-self from the MLME of the AIML peer STA, the MLME of the AIML initiating STA transmits an AIML NDPA frame (NDPA) to the MLME of the AIML peer STA, which has transmitted the CTS-to-self (S213). The AIML NDPA frame is a frame for specifying the sounding NDP format for AIML.

Further, the MLME of the AIML initiating STA that has received the MLME-AIMLTBMSMTRQ.request and the CTS-to-self transmits an NDP corresponding to the designation by the AIML NDPA frame to the MLME of the AIML peer STA (S214). The NDP is a sounding NDP frame.

In addition, the MLME of the AIML initiating STA that has received the MLME-AIMLTBMSMTRQ.request and the CTS-to-self transmits an AIML Report Trigger frame to the MLME of the AIML peer STA (S217). The AIML Report Trigger frame is a frame for requesting the peer STA to transmit an AIML Measurement Report frame.

In addition, the MLME of the AIML initiating STA that has received the MLME-AIMLTBMSMTRQ.request and the CTS-to-self transmits an AIML Trigger frame to the MLME of the AIML peer STA (S221). The AIML Trigger frame is a frame for requesting the transmission of an NDP.

By specifying the sounding NDP format for AI/ML to each STA in the NDPA, it is possible to perform NDP transmissions for AI/ML to each STA and to perform measurement by using the NDP received at each node.

The MLME of the AIML peer STA that has received the NDP transmits an MLME-AIMLTBREPORT.indication to the SME of the AIML peer STA (S215). The MLME-AIMLTBREPORT.indication is a frame indicating that the measurement has been performed by using a trigger-based sounding NDP.

The SME of the AIML peer STA that has received the MLME-AIMLTBREPORT.indication transmits an MLME-AIMLTBREPORTRQ.request to the MLME of the AIML peer STA (S216). The MLME-AIMLTBREPORTRQ.request is a frame for requesting the transmission of an AIML Measurement Report frame.

The MLME of the AIML peer STA that has received the MLME-AIMLTBREPORTRQ.request and the AIML Report Trigger frame transmits an AIML Measurement Report frame to the MLME of the AIML initiating STA (S218). The AIML Measurement Report frame is a frame for reporting the measurement result of sounding for AIML to the counterpart STA. Further, the MLME of the AIML peer STA transmits an MLME-AIMLTBREPORTRQ.confirm to the SME of the AIML peer STA (S220). The MLME-AIMLTBREPORTRQ.confirm is a frame for reporting the result of the request for the transmission of an AIML Measurement Report frame. The AIML Measurement Report frame may be transmitted in a case where one of the MLME-AIMLTBREPORTRQ.request and the AIML Report Trigger frame has been received, instead of a case where both the MLME-AIMLTBREPORTRQ.request and the AIML Report Trigger frame have been received.

The MLME of the AIML initiating STA that has received the AIML Measurement Report frame transmits an MLME-AIMLTBMSMTRQ.confirm to the SME of the AIML initiating STA (S219).

The MLME of the AIML peer STA that has received the AIML Trigger frame transmits an NDP to the MLME of the AIML initiating STA (S222). In the NDP transmission in S222 of FIG. 2, an example is illustrated in which an STA performs an operation utilizing the measurement result without transmitting the measurement result to the counterpart STA.

The MLME of the AIML initiating STA that has received the NDP transmits an MLME-AIMLTBREPORT.indication to the SME of the AIML initiating STA (S223).

In the NDP transmission in S214 of FIG. 2, an example is illustrated in which an STA transmits the measurement result to the counterpart STA, but the STA may perform an operation utilizing the measurement result without transmitting the measurement result or may perform an operation utilizing the measurement result at the STA as the transmission source while transmitting the measurement result to the counterpart STA. The SME or the MLME may include an application for performing an operation utilizing the measurement result.

In the NDP transmission in S222 of FIG. 2, an example is illustrated in which an STA performs an operation utilizing the measurement result without transmitting the measurement result to the counterpart STA, but the STA may transmit the measurement result to the counterpart STA or may perform an operation utilizing the measurement result at the STA as the transmission source while transmitting the measurement result to the counterpart STA. The SME or the MLME may include an application for performing an operation utilizing the measurement result.

With respect to the AIML Measurement Termination Phase, the procedure starting from the AIML initiating STA and the procedure starting from the AIML peer STA will be indicated.

In a case where the AIML Measurement Termination Phase is started from the AIML initiating STA, the SME of the AIML initiating STA first transmits an MLME-AIMLMSMTTERMINATION.request to the MLME of the AIML initiating STA (S130, S230). The MLME-AIMLMSMTTERMINATION.request is a frame for requesting the transmission of an AIML Measurement Setup Termination frame.

The MLME of the AIML initiating STA that has received the MLME-AIMLMSMTTERMINATION.request transmits an AIML Measurement Setup Termination frame to the MLME of the AIML peer STA(S131, S231). The AIML Measurement Setup Termination frame is a frame for indicating the cancellation of the setting of sounding for AIML.

The MLME of the AIML peer STA that has received the AIML Measurement Setup Termination frame transmits an MLME-AIMLMSMTTERMINATION.indication to the SME of the AIML peer STA (S132, S232). The MLME-AIMLMSMTTERMINATION.indication is a frame indicating that an AIML Measurement Setup Termination frame has been received. Further, the MLME of the AIML peer STA that has received the AIML Measurement Setup Termination frame transmits an Ack to the MLME of the AIML initiating STA (S133, S233). The Ack is a response (acknowledgment) frame.

The MLME of the AIML initiating STA that has received the Ack transmits an MLME-AIMLMSMTTERMINATION.confirm to the SME of the AIML initiating STA (S134, S234). The MLME-AIMLMSMTTERMINATION.confirm is a frame indicating that an AIML Measurement Setup Termination frame has been received and the setting of sounding for AIML has been canceled.

In a case where the AIML Measurement Termination Phase is started from the AIML peer STA, the SME of the AIMLpeer STA first transmits an MLME-AIMLMSMTTERMINATION.request to the MLME of the AIML peer STA(S140, S240).

The MLME of the AIML peer STA that has received the MLME-AIMLMSMTTERMINATION.request transmits an AIML Measurement Setup Termination frame to the MLME of the AIML initiating STA (S141, S241).

The MLME of the AIML initiating STA that has received the AIML Measurement Setup Termination frame transmits an MLME-AIMLMSMTTERMINATION.indication to the SME of the AIML initiating STA (S142, S242). Further, the MLME of the AIML initiating STA that has received the AIML Measurement Setup Termination frame transmits an Ack to the MLME of the AIML peer STA (S143, S243).

The MLME of the AIML peer STA that has received the Ack transmits an MLME-AIMLMSMTTERMINATION.confirm to the SME of the AIML peer STA (S144, S244).

The present embodiment allows a node to specify the sounding NDP format for AI/ML to other individual nodes, and also to specify mixed presence of the sounding NDP format for AI/ML and a conventional sounding NDP format(s).

With respect to the NDPA frame for specifying the sounding NDP format for AI/ML, four embodiments will be described.

### <Embodiment 1>

In Embodiment 1, each STA info that constitutes an STA info List included in an NDPA frame format is defined to include an AIML sounding NDP subfield in a case where an AID11 subfield of the STA info has a specific value. Thus, it is possible to specify and notify a subfield (AIML sounding NDP subfield), in which the sounding NDP format for AI/ML is defined, to each node.

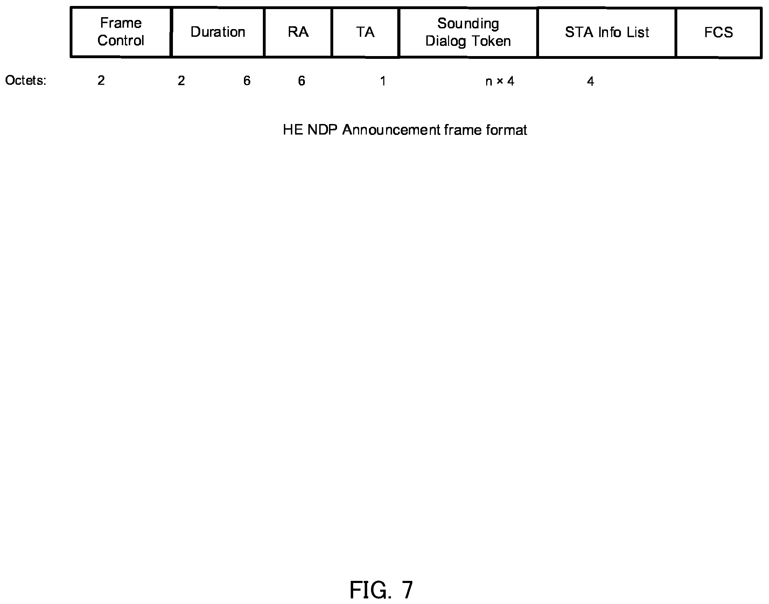

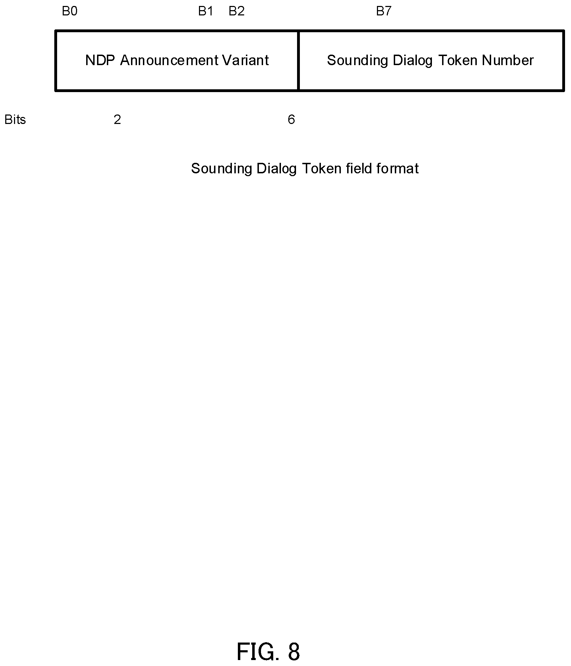

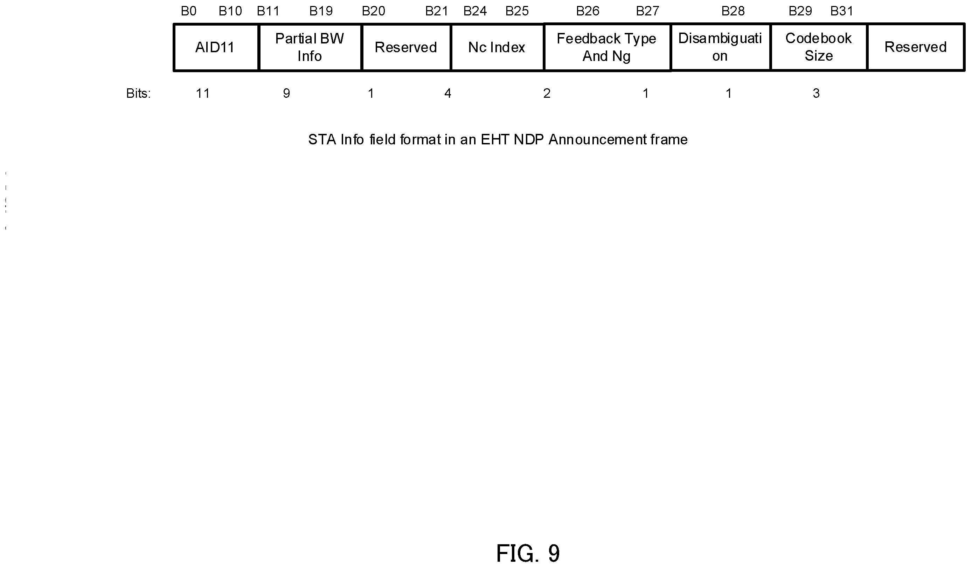

FIG. 7 illustrates an NDPA frame format. The NDPA frame includes a Sounding Dialog Token field and an STA Info List field. FIG. 8 illustrates a format of the Sounding Dialog Token field in FIG. 7. FIG. 9 illustrates a format of a STA Info field included in the STA Info List field in FIG. 7.

As illustrated in FIG. 8, the Sounding Dialog Token field is composed of a 2-bit NDP Announcement Variant subfield and a 6-bit Sounding Dialog Token Number subfield.

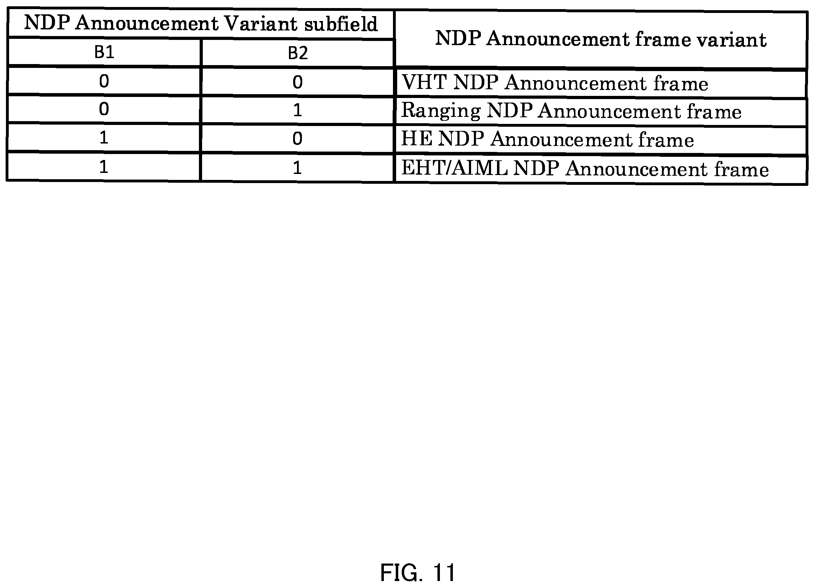

FIG. 11 illustrates definitions for the NDP Announcement Variant subfield. For the 2-bit NDP Announcement Variant subfield, four variants which are Very High Throughput (VHT) (NDP Announcement Variant = 00), Ranging (NDP Announcement Variant = 01), High Efficiency (HE) (NDP Announcement Variant = 10), and Extremely High Throughput (EHT) (NDP Announcement Variant = 11) have already been defined as NDP Announcement frame variants. That is, no Reserved is present in the NDP Announcement Variant subfield. Accordingly, in the example illustrated in FIG. 11, NDP Announcement Variant = 11 is defined as being shared between EHT and AIML (EHT/AIML). Thus, it is necessary to recognize based on other information whether NDP Announcement Variant = 11 is for EHT or for AIML. NDP Announcement Variant = 11 means that the frame includes at least one NDP Announcement of ETH/AIML.

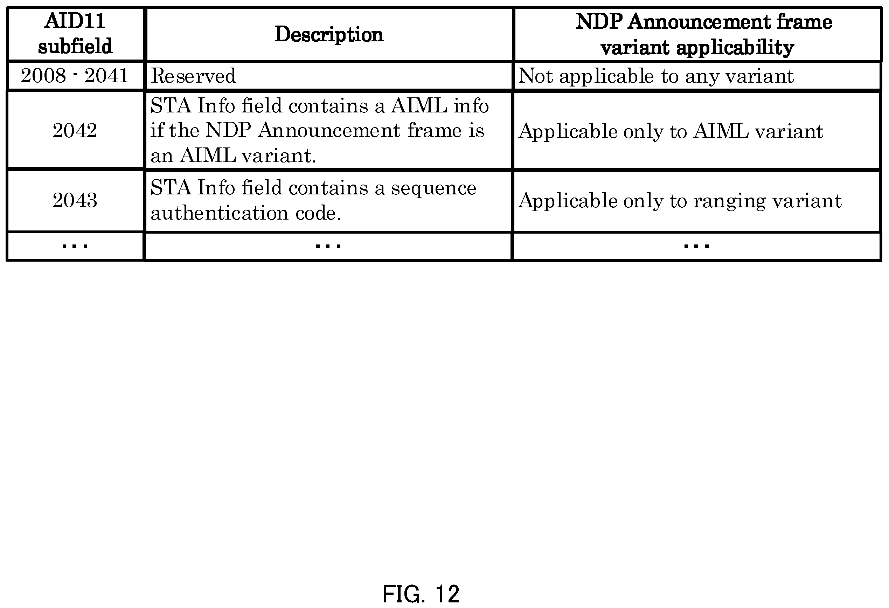

FIG. 9 illustrates a format of the STA Info field, which is STA information, in the case of EHT. As illustrated in FIG. 9, an 11-bit AID11 subfield is present at the beginning of the STA info. The AIML sounding NDP subfield is defined in a case where the value in the AID11 subfield is a specific value. FIG. 12 illustrates exemplary definitions for the AID11 subfield. In the example illustrated in FIG. 12, 2042 which is undefined value (Reserved) causes the variant of the NDP Announcement frame to be defined as AIML.

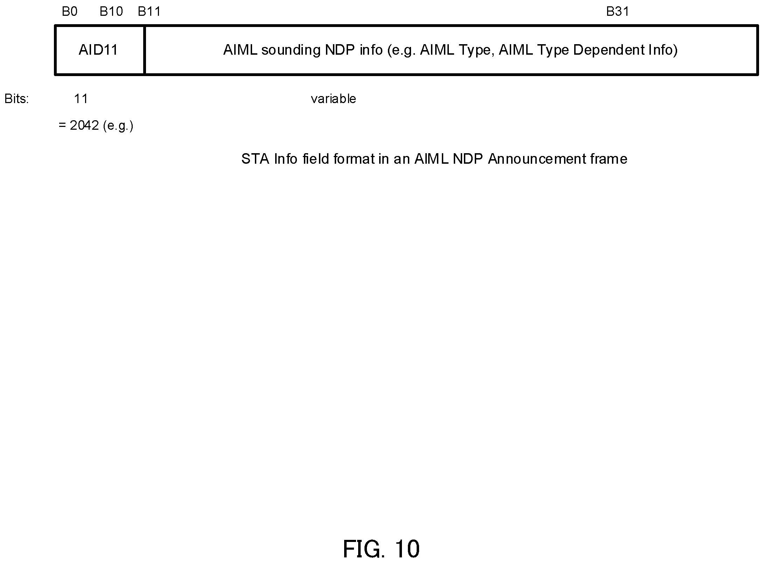

FIG. 10 illustrates a format of the STA Info field, which is STA information, in the case of AIML. For example, in a case where the value in the AID11 subfield is 2042, a subfield after the AID11 subfield is defined to include AIML sounding NDP info, which is sounding NDP information for AI/ML, as in an exemplary STA Info field format illustrated in FIG. 10. The AIML sounding NDP info may include, for example, an AIML Type subfield, which is an AIML type, or AIML Type Dependent Info, which is information dependent on the AIML Type.

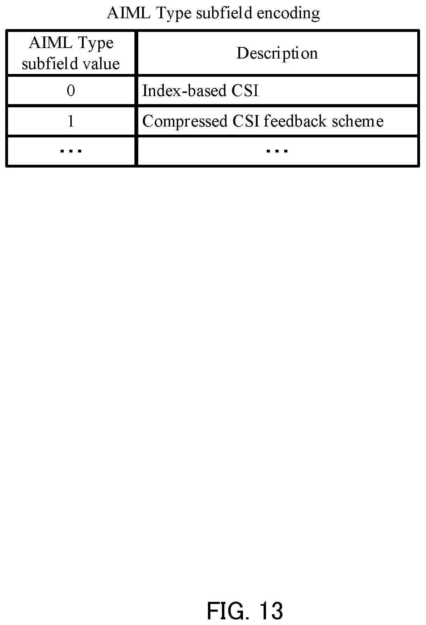

FIG. 13 illustrates exemplary definitions for the AIML Type subfield. As illustrated in FIG. 13, for example, Index-based CSI (for example, see NPL 4) and a Compressed CSI feedback scheme (for example, see NPL 5) are present as AIML types. The number of AIML types may be three or more. FIG. 13 illustrates an example in which the value in the AIML Type subfield is 0 in the case of the Index-based CSI and is 1 in the case of the Compressed CSI feedback scheme, respectively.

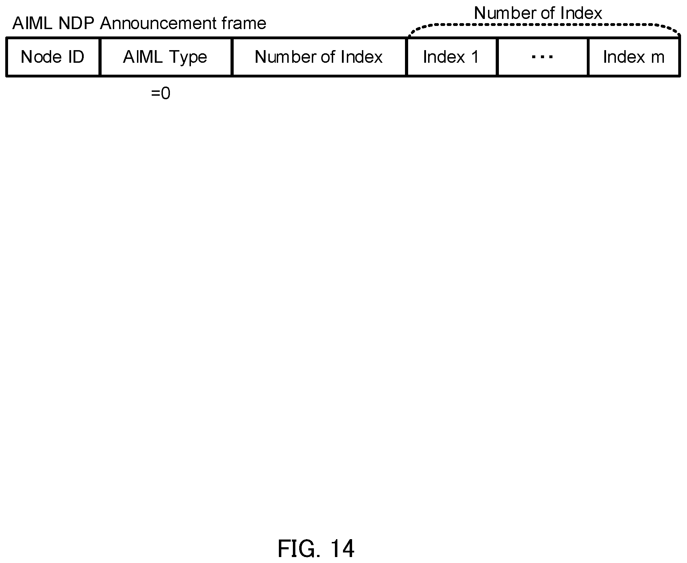

FIG. 14 illustrates exemplary AIML sounding NDP info in the case of AIML Type = 0 (Index-based CSI). The Index-based CSI is a form in which collected CSI is optimized (learned), a CSI feedback vector that allows the smallest amount of feedback information is obtained, and an index (Index) of the vector is transmitted from each STA. In the exemplary AIML sounding NDP info illustrated in FIG. 14, the number of indexes specified in the Number of Index are specified to STAs, respectively. In this example, the number of indexes is specified in the Number of Index, but the number of indexes may be specified based on the staring index and the ending index or the range of indexes may be specified based on the starting index and the number of indexes. In addition, a plurality of indexes may be divided into a plurality of categories, and the indexes in the divided categories may be specified.

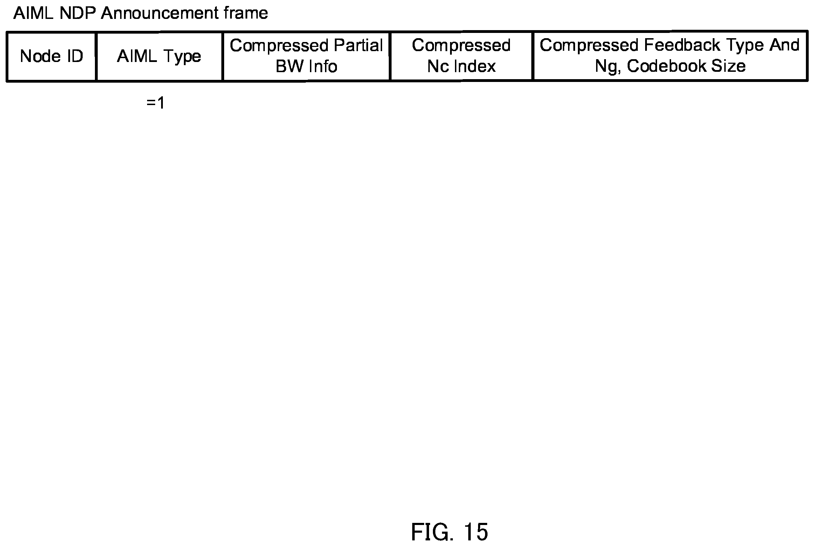

FIG. 15 illustrates exemplary AIML sounding NDP info in the case of AIML Type = 1 (Compressed CSI feedback scheme). The Compressed CSI feedback scheme is a scheme in which a neural network for compressing CSI, which is termed as an Autoencoder, is optimized by a training phase and is then divided into an Encoder for Compression and a Decoder for Decompression, both of which are disposed and operated on a transmission side and a reception side. In the exemplary AIML sounding NDP info illustrated in FIG. 15, the CSI feedback specifications after compression include Compressed Partial BW (Band Width) Info, Compressed Nc Index, and Compressed Feedback Type And Ng, Codebook Size which are compressed information.

In the example in FIG. 9, it is configured such that the AIML sounding NDP subfield is defined in a case where the AID11 subfield has a specific value, but it may also be configured such that switching to the CSI feedback specifications after CSI compression is possible without explicitly indicating the AIML NDP Announcement frame in a case where it can be recognized that the Autoencoder has already been disposed at the time of the start of the AIML Measurement Phase, such as in a case where it can be recognized based on a session ID, a Dialog Token, and/or the like that the Autoencoder has already been disposed. It may also be configured such that the AIML NDP Announcement frame is recognized by setting a session ID, a Dialog Token, and/or the like to a specific value(s) as an identifier(s) that are set in advance in the AIML Measurement Setup Phase or the like.

Further, the present disclosure is not limited to the format for reducing the amount of CSI feedback by AIML, but may be configured such that enhanced CSI feedback specifications that support wider/higher frequency bands are specified. In the enhanced CSI feedback, the value in the AIML Type subfield may be defined as two. Although the measurement of sounding by using an NDP has been described in Embodiment 1, the present disclosure is not limited to the measurement of sounding by using an NDP. The present disclosure may also be used in the measurement using any other frame, for example, interferometric measurement of an overlapping basic service set (OBSS) and the like. In that case, the AIML Measurement Request frame and/or the AIML Measurement Response frame may be used instead of the NDP and the AIML Measurement Report.

As described above, by defining AIML sounding NDP info in a case where an AID11 subfield in an NDPA frame has a specific value, the sounding NDP formats for AI/ML can be specified for each node. Further, since the variant of the sounding NDP can be specified in the AID11 of each STA info, it is possible to specify mixed presence of the sounding NDP format for AI/ML and a sounding NDP format(s), which is/are not for AI/ML, and to notify the specified mixed presence with one NDPA frame.

### <Embodiment 2>

In Embodiment 2, an AIML sounding NDP frame is defined in a case where a Subtype value or a Control Frame Extension value in a Frame Control field is a specific value (for example, 0001, 1100, or the like which is a currently undefined value). In a case where the Subtype value or the Control Frame Extension value in the Frame Control field is a specific value, at least one piece of pieces of STA Info that constitute an STA Info List includes AIML sounding NDP info.

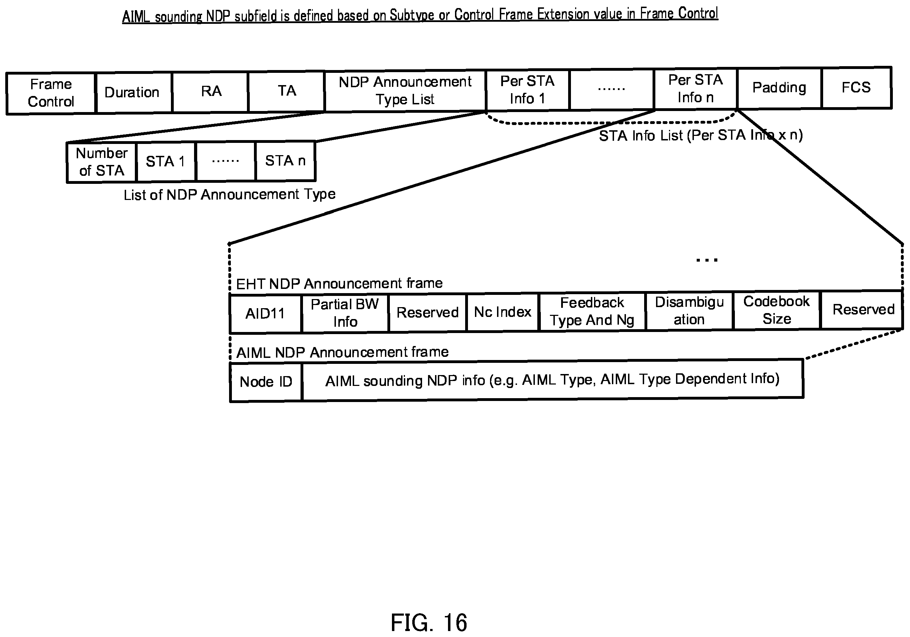

FIG. 16 illustrates an exemplary NDPA frame format for AIML. The NDPA frame for AIML includes a Frame Control field, an NDP Announcement Type List field, and a Per STA Info List field. The Frame Control field includes Type value subfields and Subtype value subfields.

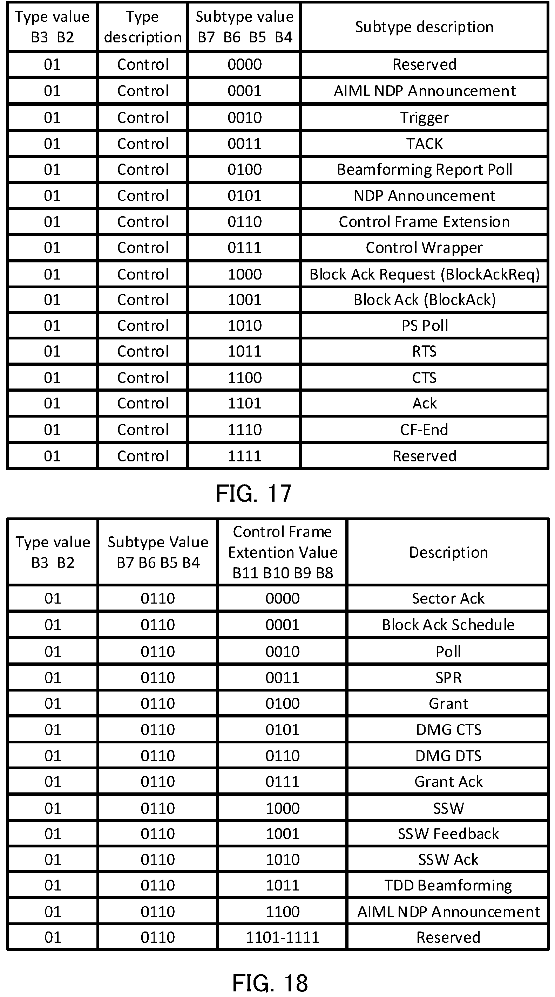

FIG. 17 illustrates exemplary definitions for the Type value subfields and the Subtype value subfields in the Frame Control field in FIG. 16. As illustrated in FIG. 17, 0001, which is an undefined value (Reserved), as the Subtype value in the Frame Control field is defined for the AIML sounding NDP frame. Although FIG. 17 illustrates an example in which the Subtype value is 0001, any other undefined value may be defined as the Subtype value.

FIG. 18 illustrates exemplary definitions for the Control Frame Extension in the Frame Control field. As illustrated in FIG. 17, the Control Frame Extension represent a case where the Subtype value in the Frame Control field is 0110. As illustrated in FIG. 18, 1100, which is an undefined value, as the Control Frame Extension value in the Frame Control field is defined for the AIML sounding NDP frame. Although FIG. 18 illustrates an example in which the undefined value 1100 as the Control Frame Extension value is defined for the AIML sounding NDP frame, any other undefined value may be defined for the AIML sounding NDP frame.

As illustrated in FIG. 17 or 18, it can be defined that the AIML sounding NDP frame is included in a case where the Subtype value or the Control Frame Extension value in the Frame Control field is a specific value.

As in the example illustrated in FIG. 16, the AIML sounding NDP frame includes an NDP Announcement Type List. The NDP Announcement Type List includes the number of STAs (Number of STA) and a list of NDP Announcement types (NDP Announcement Type List). The NDP Announcement Type List includes NDP Announcement Type fields for the number of STAs.

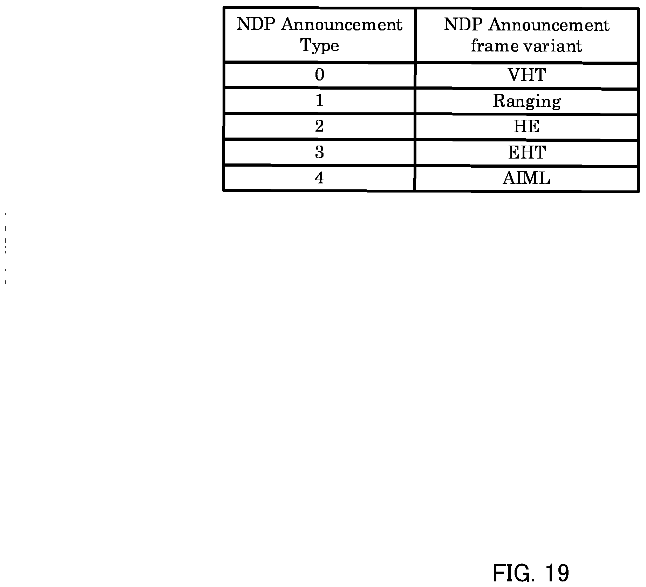

FIG. 19 illustrates exemplary definitions for NDP Announcement Types. As illustrated in FIG. 19, a definition for AIML has been added as an NDP Announcement Type, in addition to the VHT, Ranging, HE, and EHT which are variants of the NDP Announcement frame. Each NDP Announcement Type included in the NDP Announcement Type List indicates a variant of the NDP Announcement frame in each STA. For example, the variant of the NDP Announcement frame in each STA may vary, such as EHT for STA 1 and AIML for STA 2.

The content of the STA Info List including Per STA Info 1 to n is determined correspondingly to the NDP Announcement Type for each STA specified in the NDP Announcement Type List. Here, n is the number of STAs. For example, in a case where the NDP Announcement Type in STA n is AIML, Per STA Info n includes a Node ID and AIML sounding NDP info. In the content of the AIML sounding NDP info, the content described in Embodiment 1 may also be included. For example, the NDP Announcement Type in STA m may not be AIML. The Per STA Info and the STA Info List have been described, but may also be referred to as User Info or a User Info List, respectively.

As described above, an AIML sounding NDP frame is defined in a case where a Subtype value or a Control Frame Extension value in a Frame Control field is a specific value, and an NDP Announcement Type List is provided in an NDPA frame for AIML, thereby making it possible to specify the sounding NDP format for AI/ML or a sounding NDP format(s), which is/are not for AI/ML, to each node, that is, to specify mixed presence of different sounding NDP formats and to notify each node of the specified mixed presence with one NDPA frame.

### <Embodiment 3>

In Embodiment 3, a frame that includes AIML sounding NDP info is defined in a case where a Trigger Type in a Trigger frame has a specific value, for example, eight or the like which is an undefined value.

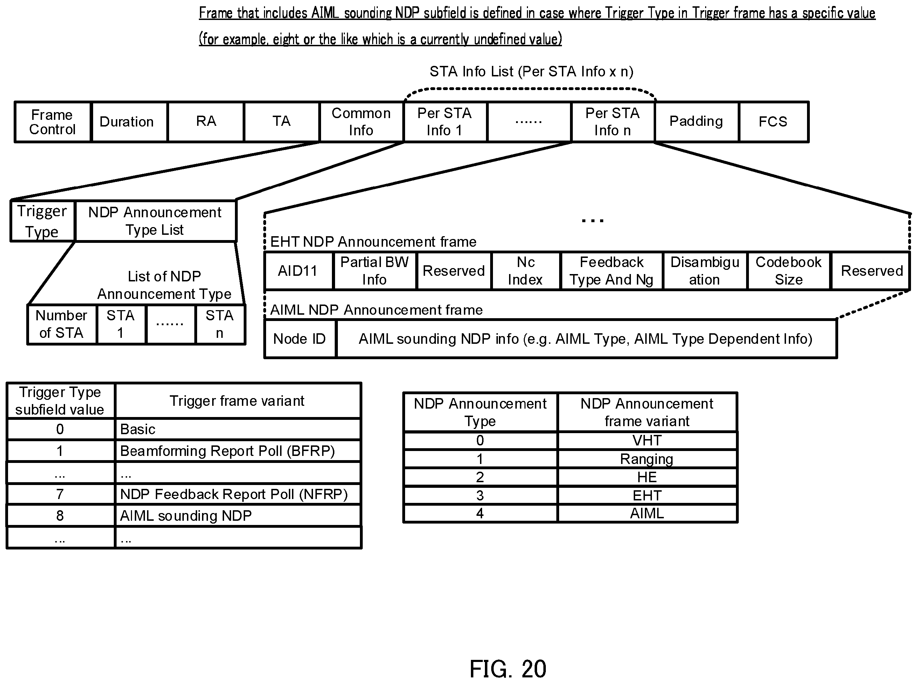

FIG. 20 illustrates an exemplary Trigger frame format for AIML. The Trigger frame includes a Common Info field and an STA Info List field. The Common Info field includes a Trigger Type subfield and an NDP Announcement Type List subfield. In the Trigger Type subfield, the type of the Trigger frame is specified. The NDP Announcement Type List includes a Number of STA field and a list of NDP Announcement Types.

The content of the NDP Announcement Type List is the same as that in Embodiment 2. The STA Info List field includes Per STA Info 1 to n. The content of the STA Info List is the same as that in Embodiment 2. The contents of Per STA Info 1 to n are determined correspondingly to the NDP Announcement Type of each STA specified in the NDP Announcement Type List. The Per STA Info and the STA Info List have been described, but may also be referred to as User Info or a User Info List, respectively. Further, it may also be configured such that the NDP Announcement Type List or the STA Info List includes a plurality of subfields indicating UL/DL (uplink/downlink) of an NDP to be specified.

As illustrated in FIG. 20, it is defined that AIML sounding NDP info is included in a case where the value in the Trigger Type subfield is eight which is an undefined value. In a case where the value in the Trigger Type subfield is eight, at least one of STAs that constitute the NDP Announcement Type List includes AIML sounding NDP info. Although FIG. 20 illustrates an example in which the undefined value for defining the AIML sounding NDP info is eight, any other undefined value may be defined for the AIML sounding NDP info.

Instead of the NDPA or the AIML NPDA frame in the sounding procedures for AI/ML illustrated in FIGS. 1 and 2, the Trigger frame illustrated in FIG. 20, in which a Trigger Type is set to a specific value, is used.

For example, an access point (AP) transmits a PPDU including a Trigger frame, and then, for example, after a short inter frame space (SIFS) time, transmits another PPDU (for example, an NDP) to an STA. The STA that has received the NDP may transmit an NDP or a report frame. The AP may include, in the Trigger frame, information (for example, a next PPDU subfield, an additional PPDU subfield, or a following PPDU subfield) indicating that another PPDU (for example, an NDP) is transmitted following the Trigger frame.

As described above, according to Embodiment 3, a frame that includes AIML sounding NDP info is defined in a case where a Trigger Type in a Trigger frame has a specific value, and an NDP Announcement Type List is provided, thereby making it possible to specify the sounding NDP format for AI/ML to each node. That is, it is possible to specify mixed presence of a plurality of variants of sounding NDP formats to each node, and to notify each node of the specified mixed presence with one NDPA frame.

### <Embodiment 4>

In Embodiment 4, an informational element (AIML Sounding NDP Information Element) including AIML sounding NDP info is defined and is notified with Management frames.

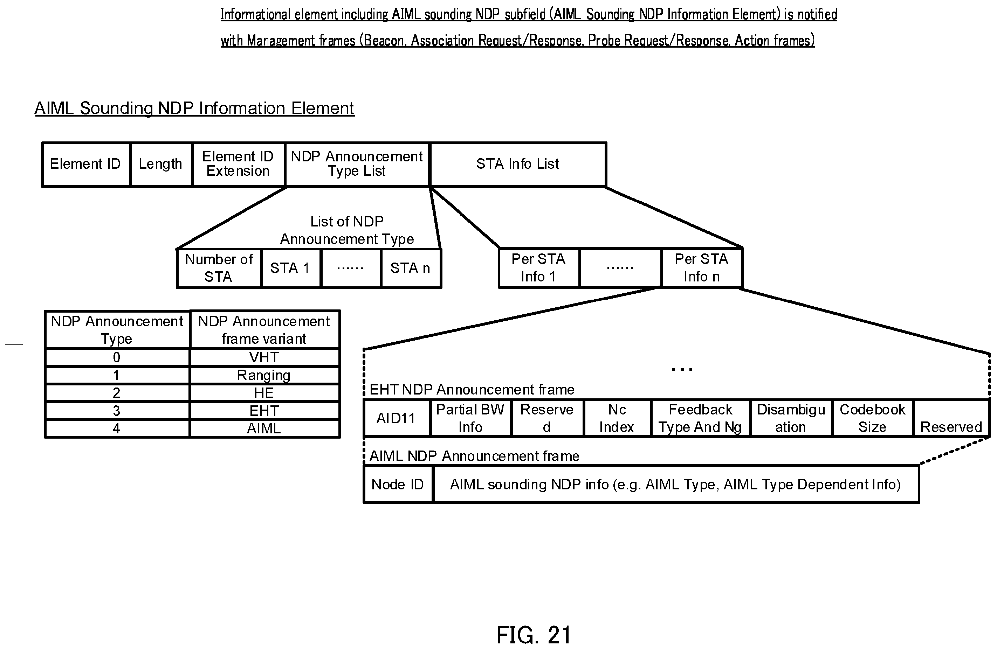

FIG. 21 illustrates an exemplary configuration of an AIML Sounding NDP Information Element. The AIML Sounding NDP Information Element may also be defined to represent a case where an Element ID or Element ID Extension is a specific value which is an undefined value. In that case, the AIML Sounding NDP Information Element may be configured to include an NDP Announcement Type List and an STA Info List as illustrated in FIG. 21. The contents of these Lists are the same as those in Embodiment 2. The Per STA Info and the STA Info List have been described, but may also be referred to as User Info or a User Info List, respectively.

The AIML Sounding NDP Information Element configured in the above-described manner is included in and notified with Management frames such as a Beacon frame, an Association Request/Response frame, a Probe Request/Response frame, and Action frames, thereby making it possible to notify each STA of the information including the AIML sounding NDP info.

As described above, an information element (AIML Sounding NDP Information Element) including AIML sounding NDP info is notified with Management frames, thereby causing the sounding NDP format for AI/ML to be specified to each node, and thus, it is possible to notify mixed presence of a plurality of sounding NDP formats.

The interface names (frame names) and the names of fields or subfields described in Embodiments 1 to 4 may also be other names.

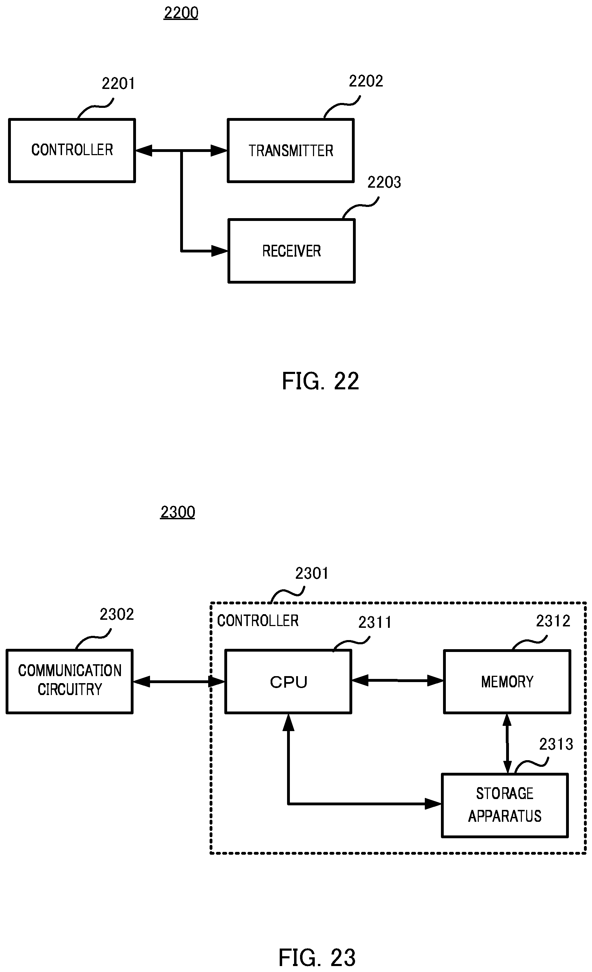

FIG. 22 illustrates a configuration of each STA 2200. Controller 2201 (corresponding to control circuitry, for example) controls transmitter 2202 and receiver 2203 based on a signal received by receiver 2203 or a signal inputted through an inputter (not illustrated) in the STA. Both the SME and the MLME represents the functions present in the controller. Further, in another example, controller 2201 may have the functions of the MLME and may have part of the functions of the SME. In other words, part or all of the functions of the SME may also be implemented in another communication apparatus 2300 (for example, another STA, another access point (AP), a wireless LAN controller, a Multi-AP coordinator, a cloud server, Software as a Service (SaaS), a virtual machine (VM), or a container) separate from STA 2200. Transmitter 2202 (corresponding to transmission circuitry, for example) transmits a signal to the counterpart STA. Receiver 2203 (corresponding to reception circuitry, for example) receives a signal from the counterpart STA. Transmitter 2202 and receiver 2203 may integrally constitute a transceiver. Transmitter 2202, receiver 2203, transmitter 2202 and receiver 2203, or a transceiver constitute(s) a communicator.

FIG. 23 illustrates a configuration of another communication apparatus 2300. Another communication apparatus 2300 includes controller 2301 and communication circuitry 2302. Controller 2301 has the functions of the SME. Communication circuitry 2302 communicates with the counterpart communication apparatus (for example, STA 2200). Controller 2301 and communication circuitry 2302 may perform communication by using a communication primitive (a message or a signal) between the SME and the MLME described in each embodiment. Controller 2301 may include CPU 2311, memory 2312, and storage apparatus 2313. CPU 2311 executes the functions of the SME. Memory 2312 is used when CPU 2311 executes processing. Storage apparatus 2313 stores software related to the functions of the SME (for example, a binary file, an execution file, a program code, or a container image). CPU 2311 may cause the software stored in storage apparatus 2313 to be transferred to memory 2312 in order to execute the functions of the SME.

Although the embodiments have been described above with reference to the accompanying drawings, the present disclosure is not limited to such examples. It is obvious that a person skilled in the art can arrive at various variations and modifications within the scope described in the claims. It is understood that such variations and modifications also belong to the technical scope of the present disclosure. Further, components in the embodiments described above may be arbitrarily combined without departing from the spirit of the present disclosure.

In the embodiments described above, the notation "... processor", "...er", "...or" or "...ar" used for each component may be replaced with another notation such as "... circuitry", "... assembly", "... device", "... unit" or "... module".

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include a radio frequency (RF) module including amplifiers, RF modulators/demodulators and the like, and one or more antennas. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

In recent years, in Internet of Things (IoT) technology, Cyber Physical Systems (CPSs), which are a new concept of creating new added value by information cooperation between a physical space and cyberspace, has attracted attention. This CPS concept can also be adopted in the above embodiments.

That is, a basic configuration of the CPSs is, for example, such that an edge server disposed in the physical space and a cloud server disposed in the cyberspace can be connected to each other via a network, and processes can be distributedly processed by processors mounted in these servers. Here, it is preferable that pieces of processed data generated in the edge server or the cloud server be generated on a standardized platform. By using such a standardized platform, it is possible to efficiently build a system including various sensor groups and IoT application software.
(1) A communication apparatus according to an exemplary embodiment of the present disclosure includes: a controller that generates a frame including information on each STA (STA Info), where at least one piece of the STA Info among pieces of the STA Info is sounding NDP info for AI/ML; and a transmitter that transmits the generated frame.
(2) In the communication apparatus according to an exemplary embodiment of the present disclosure, the sounding NDP info for AI/ML in the apparatus of (1) is defined in a case where an AID11 subfield of the STA Info has a specific value.
(3) In the communication apparatus according to an exemplary embodiment of the present disclosure, the sounding NDP info for AI/ML in the apparatus of (1) is defined in a case where a subtype value or a Control Frame Extension value in a Frame Control field has a specific value.
(4) In the communication apparatus according to an exemplary embodiment of the present disclosure, the sounding NDP info for AI/ML in the apparatus of (1) is defined in a case where a Trigger type in a Trigger frame has a specific value.
(5) In the communication apparatus according to an exemplary embodiment of the present disclosure, the sounding NDP info for AI/ML in the apparatus of (1) is defined in a Management frame.
(6) A communication method according to an exemplary embodiment of the present disclosure includes: generating a frame including information on each STA (STA Info), where at least one piece of the STA Info among pieces of the STA Info is sounding NDP info for AI/ML; and transmitting the generated frame.

The disclosure of Japanese Patent Application No. 2022-181083, filed on November 11, 2022, including the specification, drawings and abstract, is incorporated herein by reference in its entirety.

### Industrial Applicability

An exemplary embodiment of the present disclosure is useful for a wireless communication apparatus.

### Reference Signs List

- 2201: Controller
- 2202: Transmitter
- 2203: Receiver

## Claims

1. A communication apparatus, comprising:
a controller that generates a frame including information on each station (STA) (STA Info), wherein at least one piece of the STA Info among pieces of the STA Info is sounding NDP (Null data PPDU (PLCP (Physical Layer Convergence Protocol) Protocol Data Unit)) info for AI (artificial intelligence)/ML (machine learning); and
a transmitter that transmits the frame having been generated.

2. The communication apparatus according to claim 1, wherein:
the frame is a sounding NDP Announcement frame (NDPA frame), and
the sounding NDP info for AI/ML is defined in a case where an AID11 subfield of the STA Info has a specific value.

3. The communication apparatus according to claim 1, wherein:
the frame is a sounding NDPA frame, and
the sounding NDP info for AI/ML is defined in a case where a subtype value or a Control Frame Extension value in a Frame Control field has a specific value.

4. The communication apparatus according to claim 1, wherein:
the frame is a Trigger frame, and
the sounding NDP info for AI/ML is defined in a case where a Trigger type in the Trigger frame has a specific value.

5. The communication apparatus according to claim 1, wherein:
the frame is a Management frame, and
the sounding NDP info for AI/ML is defined in the Management frame.

6. A communication method, comprising:
generating a frame including information on each station (STA) (STA Info), wherein at least one piece of the STA Info among pieces of the STA Info is sounding NDP (Null data PPDU (PLCP (Physical Layer Convergence Protocol) Protocol Data Unit)) info for AI (artificial intelligence)/ML (machine learning); and
transmitting the frame having been generated.
